Europäisches Patentamt

European Patent Office

Office européen des brevets

(11) Veröffentlichungsnummer: **0 062 688**
**B1**

(12) **EUROPÄISCHE PATENTSCHRIFT**

(45) Veröffentlichungstag der Patentschrift:
**07.01.87**

(21) Anmeldenummer: **81102870.3**

(22) Anmeldetag: **15.04.81**

(51) Int. Cl.⁴: **G 03 B 1/44**

(54) Filmführung, insbesondere für Filmbetrachter, Projektoren, Vergrösserungsgeräte oder dgl.

(43) Veröffentlichungstag der Anmeldung:
**20.10.82 Patentblatt 82/42**

(45) Bekanntmachung des Hinweises auf die Patenterteilung:
**07.01.87 Patentblatt 87/2**

(84) Benannte Vertragsstaaten:
**CH FR GB IT LI**

(56) Entgegenhaltungen:
**AT - B - 260 026**
**AT - B - 359 831**
**DE - A - 2 218 793**

(73) Patentinhaber: **Schrader, Hellmut, Am Hüttenkrug 12,
D-3057 Neustadt (DE)**

(72) Erfinder: **Schrader, Hellmut, Am Hüttenkrug 12,
D-3057 Neustadt (DE)**

## Beschreibung

Die Erfindung betrifft eine Filmführung, insbesondere für Filmbetrachter, Projektoren oder dgl. mit einem Bildfenster für die Bildrandbegrenzung und Filmlagedefinition, deren Öffnungsweite quer zur Filmtransportrichtung kleiner ist als die Breite des Filmtransportweges. Solche Bildfenster haben eine definierte Lage zur Optik und bewirken, dass die Bildfensterebene bzw. der dort anliegende Film auf dem Bildschirm oder der Leinwand scharf abgebildet wird.

Bei der Bemessung der Optik eines Projektors muss berücksichtigt werden, dass der transportierte Film eine durch die Bildschicht verursachte, unvermeidbare Wölbung hat. Insbesondere bei Diapositiven mit längerer Einwirkung des Lichts auf ein Bild wirkt die von der Lichtquelle ausgehende Hitze entsprechend lange auf den Film ein und verursacht eine zusätzliche Wölbung oder eine Änderung der Wölbungstiefe.

Um die Schärfe des projizierten oder betrachteten Bildes sicherzustellen, muss bei bekannten Geräten die Optik so bemessen sein, dass sie die grösste auftretende Wölbung berücksichtigt, d.h. um eine grosse Tiefenschärfe im DIA-Bereich wegen des springenden DIAs zu bekommen. Das hat aber zur Folge, dass insbesondere bei Projektoren das projizierte Bild relativ zum Abstand des Projektors von der Leinwand klein ist, wegen der für die grosse Tiefenschärfe erforderlichen grossen Brennweite des Objektivs. Trotz der weitgehenden Anpassung der Brennweite an die grösste auftretende Wölbung muss bei den auf dem Markt üblichen Projektoren im Betrieb die Schärfe häufig nachgestellt werden, weil z.B. bei nicht verglasten Diapositiven die maximal auftretende Wölbung doch noch grösser ist als vorgesehen, je nachdem wie gut oder schlecht gerahmt ist.

Aus der DE-A-2 218 793 ist eine Filmführung mit zwei hintereinander angeordneten Rahmenteilen bekannt, doch weist diese Filmführung keine besonderen Massnahmen zur Verringerung bzw. Beseitigung der Filmwölbung auf.

Der Erfindung liegt die Aufgabe zugrunde, eine Filmführung für Filmbetrachter, Projektoren oder dgl. zu schaffen, bei der die unvermeidbare Wölbung oder Wölbungsänderung des Films möglichst verringert und damit eine ausreichende Schärfe des Bildes auch dann erreicht werden kann, wenn die Brennweite kleiner als üblich gewählt wird, um ein relativ zum Abstand des Gerätes von der Leinwand grosses Bild zu ermöglichen. Diese Aufgabe wird durch die im Anspruch 1 gekennzeichnete Erfindung gelöst. Weiterbildungen der Erfindung sind in den Unteransprüchen gekennzeichnet.

Zur näheren Erläuterung der Erfindung wird im folgenden ein Ausführungsbeispiel an Hand der Zeichnungen beschrieben. Diese zeigen in

Fig. 1 die Prinzipdarstellung eines Projektors

Fig. 2 eine Schnittdarstellung des Bildfensters des in Fig. 1 gezeigten Projektors

Fig. 3 eine Draufsicht auf die Bildfensterebene

Fig. 4 einen Schnitt der Fig. 3

Fig. 5 eine Ansicht aus Fig. 4

Fig. 6, 7 und 8 Detailansichten.

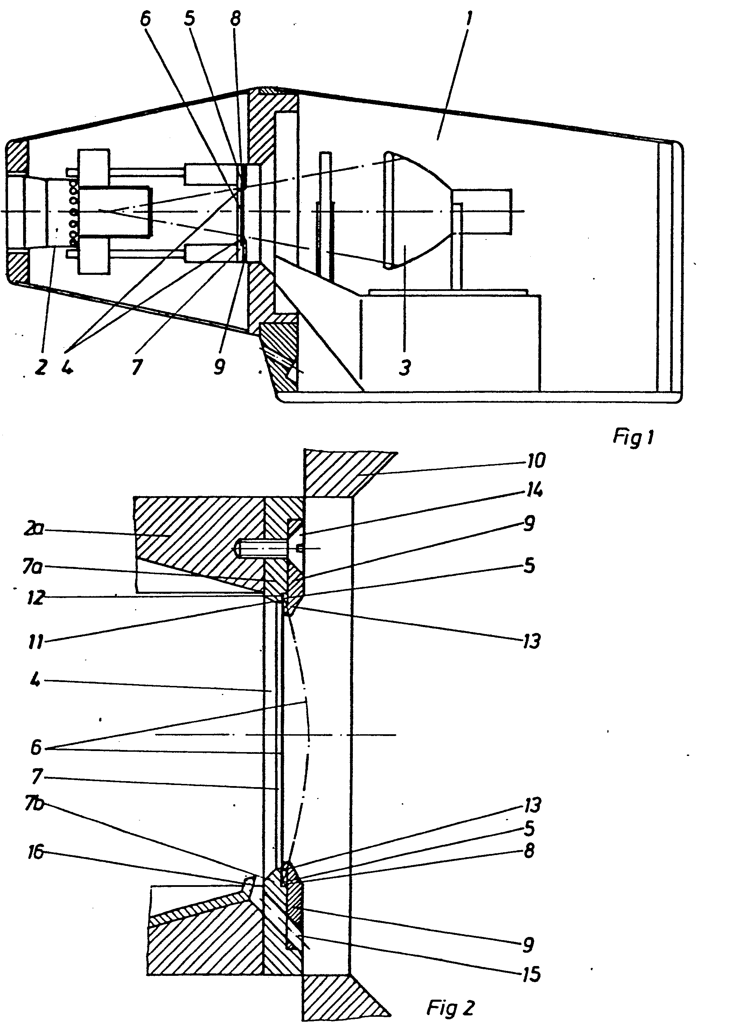

In Fig. 1 ist ein Projektor 1 mit Optik 2 und Lichtquelle 3 dargestellt, bei dem zwischen Optik 2 und Lichtquelle 3 ein Bildfenster 4 angeordnet ist, das einen festen, als Anlage für die Ränder 5 eines senkrecht zur Zeichenebene transportierten Films 6 dienenden Rahmenteil 7 enthält. Die Öffnungsweite des Rahmenteils 7 ist so viel kleiner als die Breite des Transportweges 8 für den Film 6, dass der Film 6 nur mit seinen Rändern 5 am Rahmenteil 7 anliegt. Die Breite des Transportweges 8 ist gleich oder wesentlich grösser als die Breite des Filmes 6. Die Breite bzw. der Abstand der Rahmenteile 7 ist gleich oder grösser als die Breite der Filmschicht, so dass das Bildfenster zugleich das Bildfeld begrenzt. Die relative Lage des Films 6 zur Optik 2 ist im wesentlichen durch die Anlage der Filmränder 5 am Rahmenteil 7 gegeben und definiert. Die unvermeidbare, durch die einseitig aufgebrachte Filmschicht bewirkte Wölbung des Filmes 6 ist im Bereich des Bildfensters 4 der Lagedefinition entzogen. Bei bekannten Projektoren wurde dies durch entsprechende Bemessung z.B. der Brennweite der Optik berücksichtigt. Das hat jedoch ein relativ kleines Bild zur Folge. Hier setzt die Erfindung ein, indem ein zusätzliches Rahmenteil 9 vorgesehen wird, welches noch im Bereich der Filmränder 5, also neben dem Bildfenster 4, eine Verringerung der Wölbungstiefe herbeiführt.

In Fig. 2 ist der gemäss der Erfindung abgewandelte Bereich des Projektors deutlicher herausgezeichnet, wobei die Filmtransportrichtung senkrecht zur Zeichenebene verläuft. Das Bildfenster 4 ist an einem die nicht dargestellte Optik 2 tragenden Teil 2a des Projektors 1 befestigt, indem das Rahmenteil 7 das Teil 2a gegen das Lichtquellengehäuse 10 abschliesst. Das Rahmenteil 7 ist mit einem Vorsprung 11 versehen, der als Anlage für den Film 6 bemessen ist. Der Vorsprung 11 und eine Aussparung 12 definieren den Filmtransportweg 8 im Bereich des Bildfensters 4. Der Abstand der beiden Rahmenteile 7a und 7b, die mit dem Rahmenteil 7 aus einem Stück bestehen, ist gleich oder grösser gewählt als die Filmschicht des Filmes 6, damit nicht ein Teil des wiederzugebenden Bildes verdeckt wird. Das zusätzliche Rahmenteil 9 ist auf der der Lichtquelle 3 zugewandten Seite angeordnet. Es ist mit einer solchen Öffnungsweite bemessen, dass auch sie nicht Teile des wiederzugebenden Bildes verdecken kann. Hierfür ist das Rahmenteil 9 mit einem Vorsprung 13 versehen, der in Richtung auf die durch das Rahmenteil 7 definierte Ebene vorragt und den zwischen den beiden Rahmenteilen 7 und 9 bewegten bzw. transportierten Film 6 in Richtung auf das Bildfenster verschiebt. Der Vorsprung 13 ist so geformt und länglich ausgebildet, dass eine Verzerrung oder Beschädigung des Filmes 6 ausgeschlossen ist. Dadurch wird die Wölbung des Filmes 6 reduziert oder aufgehoben. Der Vorsprung 13 ist durch eine Schraube 14 befestigt oder justierbar. Der Vorsprung 11 des Rahmenteils 7 kann so viel kürzer bemessen sein als der Vorsprung 13, dass die Wölbung kompensiert oder überkompensiert werden kann. Das ist durch die kürzere Bemessung des Vorsprunges 11 deshalb möglich, weil der Film durch den Vorsprung 13 dann über die Anlageebene des Rahmenteils 7 hinaus gebogen werden kann. Wären die beiden Vorsprünge hinsichtlich ihrer Erstreckung zum Bildfenster 4 hin gleich lang oder der Vorsprung 13 wäre insoweit kürzer, so könnte der Film maximal nur bis zur Anlageebene gebogen und dort evtl. sogar festgepresst werden. Zur Befestigung des zweiten Rahmenteils 9 am ersten Rahmenteil 7 dient eine Schraube 14, bei Bedarf auch mehrere entsprechende Schrauben.

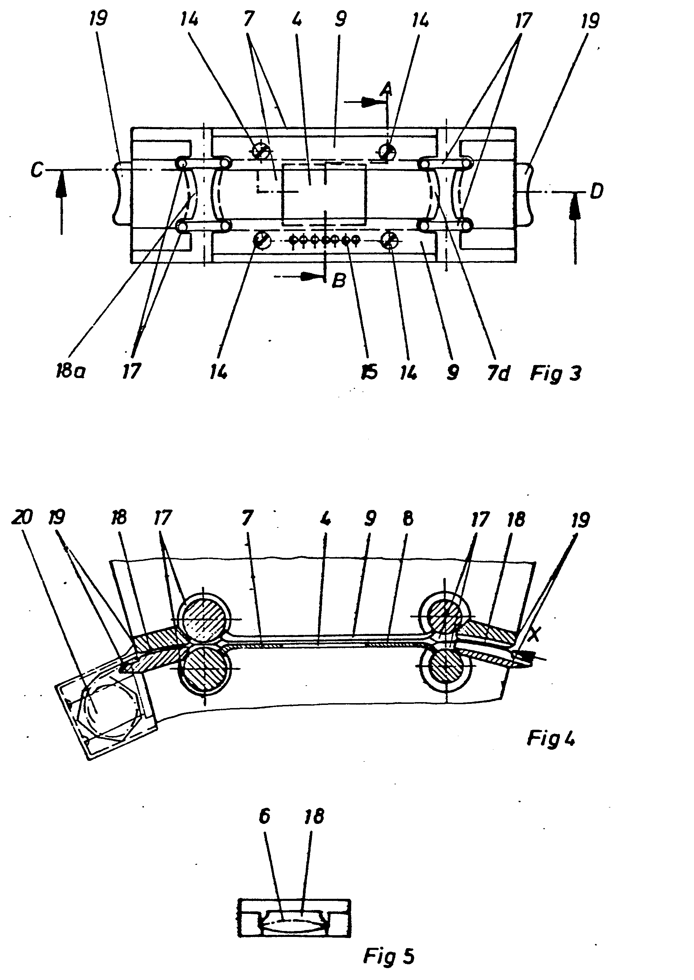

Fig. 3 zeigt eine Draufsicht auf das Bildfenster 4, aus der zugleich erkennbar ist, dass das Bildfenster 4 Teil eines aus einem Stück bestehenden Rahmenteils 7, 7a, 7b und Teil des Filmtransportweges 8 ist. In diesen Filmtransportweg 8 sind Filmtransportrollen 17 eingefügt. Der zwischen den Rahmenteilen 7, 9 verlaufende Film 6 führt also ausserhalb des Bildfensterbereiches 4 in eine Filmführung 18. Diese Filmführung ist an ihren äusseren Enden mit je einer Aufnahmeeinrichtung 19 versehen, an der Filmkassetten 20 befestigt oder verhakt werden.

Fig. 4 zeigt einen Schnitt C–D der in Fig. 3 dargestellten Filmführung.

Fig. 5 zeigt eine in Fig. 4 mit x gekennzeichnete Ansicht einer Aufnahmeeinrichtung 19. Der obere Teil ist so ausgebildet, dass auch ein stark gewölbter Film keine Flächenberührung hat. Mit einem durch diese Massnahmen ergänzten Filmbetrachter ist es möglich, einen mit Diapositiven versehenen Film 6 direkt aus der Kassette über eine staubgeschützten Filmführungsweg 18 mit in diesen Weg eingreifenden, auf den Filmrand einwirkenden Antriebsrollen 17, über den Bildfensterbereich 4 und einen weiteren entsprechenden Filmführungsweg mit oder ohne Filmantriebsrollen in eine Leerkassette einzuspulen. Durch die Fernbedienung kann der Filmantrieb und die Lage der Optik als Baueinheit gesteuert werden.

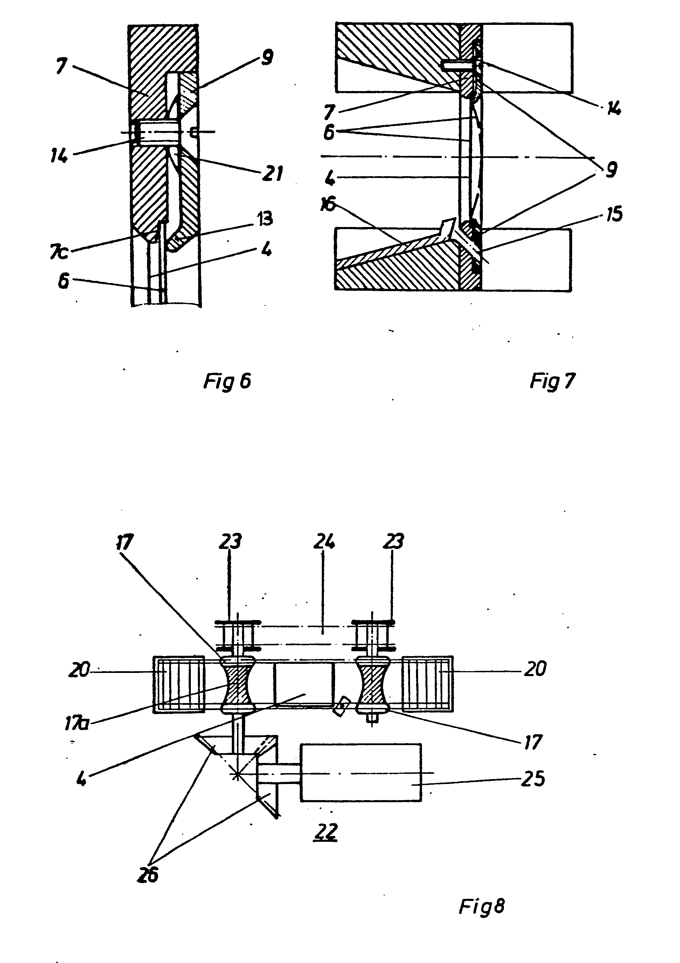

Fig. 6 zeigt eine Weiterbildung der Verstellvorrichtung für das Rahmenteil 9, bei der die Verbindung der beiden Rahmenteile 7 und 9 so gestaltet ist, dass das zweite Rahmenteil 9 mit dem ersten Rahmenteil 7 justierbar verbunden ist. Zwischen den mit Abstand voneinander angeordneten Rahmenteilen 7 und 9 ist eine Feder 21, vorzugsweise eine Tellerfeder, Gummifeder oder dgl. angeordnet. Die Innenkante 7c des Rahmenteils 7 ist abgeschrägt, um die Justierung zu erleichtern und die Gleitfähigkeit zu verbessern. Somit ist es möglich, den Vorsprung 13 bezüglich seines Abstandes von der Anlageebene einstellbar zu machen, ohne diesen Vorsprung instabil zu gestalten.

Beide Rahmenteile 7, 9 sind gemäss Fig. 7 (Schnitt A–B aus Fig. 3) mit ein oder mehreren Lüftungskanälen 15 versehen, die direkt oder über Umlenkstücke 16 den Film im Bereich des Bildfensters 4 auch von der Objektivseite her kühlen.

Fig. 8 zeigt einen Antrieb 22 für die mit konkaver Antriebsachse 17a versehenen Rollen 17 mit Zahnriementrieb 23, 24 und Motor 25 (oder Kurbel). Statt der dargestellten Kegelräder 26 kann auch ein Schneckengetriebe verwendet werden. Die konkave Ausbildung der Antriebsachse hat den Vorteil, dass der Übergang für den Film 6 gleitend ist und die Filmkanten nirgends anstossen können.

Durch die Erfindung wird auch erreicht, dass Diapositive statt von einzelnen verglasten oder unverglasten Teilen von langen unzerschnittenen Filmrollen wiedergegeben werden können. Dadurch wird eine miniaturisierte Lagerhaltung erzielt.

Die Rahmenteile 7a–c können auch einzeln gefertigt werden und erst im Projektor zu einer Einheit zusammengefügt werden. Die abgeschrägte Fläche des Teils 7c wirkt auch dadurch reibungsvermindernd, dass der Film 6 bei Überkompensation der Wölbung nur geringfügig an diesem Teil anliegt.

Wie aus den Fig. 3, 4 und 8 ersichtlich, sind die Teile 7, 9 und 18 an die Form der Antriebsrollen angepasst und ergibt auf diese Weise einen stossfreien Übergang des Films 6 aus der Filmführung in die Rollen und umgekehrt.

**Patentansprüche**

1. Filmführung, insbesondere für Filmbetrachter, Projektoren, Vergrösserungsgeräte oder dgl. mit einem Bildfenster (4) für die Bildrandbegrenzung und Filmlagedefinition, deren Öffnungsweite quer zur Filmtransportrichtung kleiner ist als die Breite des Filmtransportweges (8), wobei das Bildfenster (4) zwei den Filmtransportweg (8) zwischen sich einschliessende in Lichtrichtung hintereinander angeordnete Rahmenteile (7, 9) enthält, dadurch gekennzeichnet, dass ein Rahmenteil (7) mit beidseitigen Vertiefungen als Anlage für die Ränder (5) des Filmes (6) ausgebildet ist, und dass das andere Rahmenteil (9) beidseitig einen Vorsprung (13) aufweist, der in Richtung auf die Anlageebene des ersten Rahmenteils (7) vorsteht und gleichzeitig die Öffnung des zweiten Rahmenteils (9) begrenzt.

2. Filmführung nach Anspruch 1, dadurch gekennzeichnet, dass die Öffnungsweite des ersten Rahmenteils (7) grösser ist als die Öffnungsweite des zweiten Rahmenteils (9).

3. Filmführung nach einem der Ansprüche 1–2, dadurch gekennzeichnet, dass der Abstand des Vorsprunges (13) des zweiten Rahmenteils (9) von der Anlageebene des ersten Rahmenteils (7) im wesentlichen der Filmdicke entspricht.

4. Filmführung nach einem der Ansprüche 1–3, dadurch gekennzeichnet, dass der Abstand des Vorsprunges (13) von der Anlageebene des ersten Rahmenteils einstellbar ist.

5. Filmführung nach Anspruch 4, dadurch gekennzeichnet, dass zwischen den beiden Rahmenteilen (7, 9) Federn, insbesondere Tellerfedern angeordnet sind.

6. Filmführung nach einem der Ansprüche 1–5, dadurch gekennzeichnet, dass die Rahmenteile (7, 9) Lüftungskanäle (15) aufweisen, durch die auch die der Lichtquelle (3) abgewandte Seite des Bildfensters (4) belüftet wird.

7. Filmführung nach Anspruch 6, dadurch gekennzeichnet, dass den Lüftungskanälen (15) Umlenkteile (16) zugeordnet sind.

## Claims

1. Film guiding, especially for film viewers, projectors, magnifiers or the like with a picture gate (4) for the limitation of the picture edge and the definition of the film position whose aperture width at right angles to the direction of the film transport is smaller than the width of the film passage (8) with the picture gate (4) holding two frame parts (7, 9) enclosing the film passage (8) and being arranged behind one another in light direction, characterized by one frame part (7) being shaped with hollows on both sides for carrying the edges (5) of the film (6) and the other frame part (9) having a lug (13) on both sides protruding in the direction of the film guiding plane of the first frame part (7) and at the same time limiting the opening of the second frame part (9).

2. Film guiding according to claim 1, characterized by the aperture width of the first frame part (7) being larger than of the second frame part (9).

3. Film guiding according to one of claims 1–2, characterized by the distance of the lug (13) of the second frame part (9) from the film guiding plane of the first frame part (7) matching the thickness of the film essentially.

4. Film guiding according to one of claims 1–3, characterized by the distance of the lug (13) from the film guiding plane of the first frame part being adjustable.

5. Film guiding according to claim 4, characterized by springs, especially belleville springs, being put between the two frame parts (7, 9).

6. Film guiding according to one of claims 1–5, characterized by the frame parts (7, 9) having ventilation ducts through which also that side of the film gate (4) is farmed which is turned away from the light source.

7. Film guiding according to claim 6, characterized by deviating devices (16) being joined to the ventilation ducts (15).

## Revendications

1. Conduite du film, notamment pour agrandisseurs, diascopes, projecteurs on apparailes similaires avec une fenêtre de projection (4) pour la limitation des bords de l'image et un positionnement automatique du film, dont la largeur de l'ouverture transversale à la direction de transport du film est inférieure à la largeur du chemin de transport du film (8), la fenêtre de projection (4) compartant deux pièces de construction (7, 9) installées l'une derrière l'autre dans la direction de la lumière et entourant le chemin de transport du film. Les pièces de construction (7, 9) sont caractérisées par le fait, qu'une pièce de constructions (7) offre sur le deux côtés un approfondissement dont la fonction est de servir comme appin aux bords (5) du film (6) et que l'autre pièce de construction (9) présente sur les deux côtés un rebord (13) qui avance en direction de la partie verticale de l'approfondissement de la première pièce de construction (7) et qui en même temps limite l'ouverture de la deuxième piéce de construction (9).

2. Conduite du film selon revendication 1, caractérisée par le fait, que l'écart entre les extrémités respectives des parties basses et hautes (7a, 7b) de la première pièce de construction (7) est supérieur à l'écart entre les extrémités respectives des parties basses et hautes de la deuxième pièce de construction (9).

3. Conduite du film selon une des revendications 1–2, caractérisée par le fait, que l'écart entre le rebord (13) de la deuxième pièce de construction et la partie verticale de l'approfondissement de la première pièce de construction correspond plus ou moins à l'épaisseur du film.

4. Conduite du film selon une des revendications 1–3, caractérisée par le fait, que l'écart entre le rebord (13) de la deuxième pièce de construction et la partie verticale de l'approfondissement de la première pièce de construction (7) est réglable.

5. Conduite du film selon revendication 4, caractérisée par le fait, qu'entre les deux pièces de construction (7, 9) se trouvent des ressarts, notamment des resorts de Belleville.

6. Conduite du film selon une des revendications 1–5, caractérisée par le fait, que les pièces de construction (7, 9) comportent des conduits d'aération (15), par lesquels également la surface extérieure de la fenêtre de projection (4) est aérée.

7. Conduite du film selon revendication 6, caractérisée par le fait, qu'aux conduits d'aération sont attribuées des pièces complementaires susceptibles de dévier le courant d'air qui sort du système des conduits d'aération.

0 062 688

Fig 1

Fig 2

Fig 3

Fig 4

Fig 5

7

Fig 6

Fig 7

Fig8